# EUROPÄISCHE PATENTSCHRIFT

(11) **EP 3 221 610 B1**
(45) Veröffentlichungstag und Bekanntmachung des Hinweises auf die Patenterteilung: **24.04.2019**
(21) Anmeldenummer: 15775739.4
(22) Anmeldetag: 12.10.2015
(51) Int. Cl.: F16F 1/38

(54) **ELASTOMERLAGER FÜR EIN FAHRZEUG**
ELASTOMER BEARING FOR A VEHICLE
PALIER ÉLASTOMÈRE POUR VÉHICULE

(30) Priorität: 18.11.2014 DE 102014223534
(43) Veröffentlichungstag der Anmeldung: 27.09.2017
(73) Patentinhaber: ZF Friedrichshafen AG, 88046 Friedrichshafen (DE)
(72) Erfinder: PAPE, Matthias, 49179 Ostercappeln (DE); VOCKE, Hendrik, 49124 Georgsmarienhütte (DE); VON DER HAAR, Lars, 49577 Kettenkamp (DE)
(86) Internationale Anmeldenummer: PCT/EP2015/073495
(87) Internationale Veröffentlichungsnummer: WO 2016/078828

(56) Entgegenhaltungen:
- WO-A1-03/093039
- FR-A1- 2 312 687
- GB-A- 396 377
- US-A1- 2005 192 103

## Beschreibung

Die Erfindung betrifft ein Elastomerlager für ein Fahrzeug, mit einer sich in einer axialen Richtung erstreckenden Außenhülse, einem einen erhabenen Lagerbereich umfassenden Lagerinnenteil, welches mit seinem Lagerbereich in der Außenhülse angeordnet ist und sich in axialer Richtung beidseitig aus der Außenhülse heraus erstreckt, und einer den Lagerbereich umringenden und in axialer Richtung beidseitig in der Außenhülse festgelegten Lageranordnung, die sich von dem Lagerinnenteil bis zu der Außenhülse erstreckt und zwei in axialer Richtung nebeneinander angeordnete Elastomer-Halbschalen umfasst, zwischen denen der Lagerbereich in axialer Richtung gesichert ist.

Die DE 25 20 947 A1 offenbart ein elastisches Gelenklager für oszillierende Bewegungen um eine Achse, bestehend aus einem zwischen einem metallischen Aufnahmeauge und einer inneren Welle angeordneten hohlen Gummi-Metall-Rotationskörper, der lediglich durch Reibungshaftung kraftschlüssig mit dem der Form der äußeren Mantelfläche angepassten, im Wesentlichen zylindrischen Aufnahmeauge und der der Form der inneren Mantelfläche angepassten metallischen Welle verbunden ist, wobei an den Enden der äußeren und inneren Mantelfläche dünnwandige, voneinander unabhängige und nicht miteinander verbundene zylindrische, zur Gummioberfläche ausgerichtete Metallringe festhaftend anvulkanisiert sind und der Gummikörper lediglich durch axiales Zusammenziehen der äußeren und/oder inneren Metallringe radial an das Aufnahmeauge und/oder die innere Welle angepresst wird und die äußeren und inneren Metallringe nach dem axialen Zusammenziehen gegen Herausschieben in axialer Richtung am Aufnahmeauge und der inneren Welle gesichert werden. Der Gummi-Metall-Rotationskörper besteht aus zwei gleichen in der Mitte zusammenstoßenden, symmetrisch angeordneten Teilen, wobei der mittlere Teil des Gummikörpers die Form eines Hohlzylinders besitzt, die äußeren Enden des Gummikörpers außen und innen konisch verlaufen und nur diese konischen Mantelflächen mit aufvulkanisierten konischen Metallringen versehen sind, deren innerer geschlitzt sein kann.

Da bei diesem Gelenklager die innere Welle mit dem Gummikörper nicht durch Vulkanisation verbunden ist, können die Teile des Gummi-Metall-Rotationskörpers vorgefertigt und je nach Bedarf mit inneren Wellen mit unterschiedlichen Längen und/oder Anschlussbereichen kombiniert werden, sodass die Variantenvielfalt erhöht ist. Nachteilig an der rein kraftschlüssigen Verbindung ist allerdings, dass bei größeren Drehmomenten zwischen dem Aufnahmeauge und der inneren Welle ein Durchrutschen der inneren Welle gegenüber dem Gummi-Metall-Rotationskörper erfolgen kann. Solche größeren Drehmomente können z.B. auftreten, wenn das Gelenklager in der Rad- oder Achsaufhängung eines Nutzfahrzeugs, wie z.B. eines Busses, eingesetzt wird. Durch das Durchrutschen verstellt sich eine drehmomentfreie Referenzlage des Gelenklagers, was im Fahrbetrieb zu einer unangenehmen Geräuschentwicklung, wie z.B. zu einem Quietschen führen kann.

In den Druckschriften GB 396 377, US 2005/192103 A1, FR 2 312 687 A1, WO 03/093039 A1 sind weitere Ausführungsformen von solchen Vorrichtungen gezeigt.

Ausgehend hiervon liegt der Erfindung die Aufgabe zugrunde, ein Elastomerlager der eingangs genannten Art derart weiterzubilden, dass ein Durchrutschen des Lagerinnenteils gegenüber der Lageranordnung verhindert oder zumindest erschwert werden kann.

Diese Aufgabe wird durch ein Elastomerlager nach Anspruch 1 gelöst. Bevorzugte Weiterbildungen des Elastomerlagers sind in den Unteransprüchen und in der nachfolgenden Beschreibung gegeben.

Das Elastomerlager für ein Fahrzeug, insbesondere Kraftfahrzeug, weist eine sich in einer axialen Richtung erstreckende Außenhülse, ein einen erhabenen Lagerbereich umfassendes Lagerinnenteil, welches mit seinem Lagerbereich in der Außenhülse angeordnet ist und sich in axialer Richtung beidseitig aus der Außenhülse heraus erstreckt, und eine den Lagerbereich umringende und in axialer Richtung beidseitig in der Außenhülse festgelegte Lageranordnung auf, die sich von dem Lagerinnenteil bis zu der Außenhülse erstreckt und zwei in axialer Richtung nebeneinander angeordnete Elastomer-Halbschalen umfasst, zwischen denen der Lagerbereich in axialer Richtung, insbesondere beidseitig, gesichert ist, wobei der Lagerbereich mit mehreren in axialer Richtung verlaufenden und rings seines Außenumfangs im Abstand zueinander angeordneten Erhebungen und/oder Vertiefungen versehen ist, die formschlüssig mit den Elastomer-Halbschalen in Eingriff stehen.

Die formschlüssig mit den Elastomer-Halbschalen in Eingriff stehenden Erhebungen und/oder Vertiefungen des Lagerbereichs wirken einem Durchrutschen des Lagerinnenteils gegenüber der Lageranordnung entgegen. Ein solches Durchrutschen kann somit verhindert oder zumindest erschwert werden.

Die Verbindung zwischen dem Lagerinnenteil und der Lageranordnung und/oder den Elastomer-Halbschalen ist vorzugsweise ausschließlich kraftschlüssig und/oder formschlüssig. Bevorzugt ist das Lagerinnenteil mit der Lageranordnung und/oder den Elastomer-Halbschalen nicht stoffschlüssig, insbesondere nicht durch Vulkanisation und/oder Kleben, verbunden. Die Lageranordnung ist vorzugsweise aus den beiden Elastomer-Halbschalen zusammengesetzt.

Dem Elastomerlager und/oder der Außenhülse ist bevorzugt eine Längsmittelachse zugeordnet, die insbesondere in axialer Richtung verläuft. Vorteilhaft ist die Außenhülse und/oder deren Innenumfangsfläche rotationssymmetrisch ausgebildet, insbesondere bezüglich der Längsmittelachse. Vorzugsweise ist die Außenhülse zylindrisch oder im Wesentlichen zylindrisch ausgebildet. Die Außenhülse besteht bevorzugt aus Metall. Beispielweise besteht die Außenhülse aus einem Eisenwerkstoff, wie z.B. Stahl.

Dem Lagerinnenteil ist bevorzugt eine Längsachse zugeordnet, die vorzugsweise auch eine Mittelachse des Lagerinnenteils bildet und insbesondere als Lagerinnenteillängsachse bezeichnet wird. An seinen axialen Enden ist das Lagerinnenteil vorzugsweise mit abgeflachten Anschlussbereichen versehen, durch welche sich insbesondere jeweils ein Montageloch hindurch erstreckt. Abgesehen von den Erhebungen und/oder Vertiefungen und/oder von den Anschlussbereichen ist das Lagerinnenteil, insbesondere bezüglich der Lagerinnenteillängsachse, vorzugsweise rotationssymmetrisch ausgebildet. Bevorzugt ist das Lagerinnenteil und/oder der Lagerbereich im Wesentlichen rotationssymmetrisch ausgebildet, vorzugsweise bezüglich der Lagerinnenteillängsachse. Der Ausdruck "im Wesentlichen" berücksichtigt dabei insbesondere die Erhebungen und/oder Vertiefungen des Lagerbereichs und/oder die Anschlussbereiche.

Der Lagerbereich ist, abgesehen von den Erhebungen und/oder Vertiefungen, vorzugsweise kugelförmig oder näherungsweise kugelförmig ausgebildet. Bevorzugt weist der Lagerbereich zwei halbkugelförmige Abschnitte und einen zwischen diesen angeordneten zylindrischen Abschnitt auf. Der zylindrische Abschnitt ist insbesondere in axialer Richtung und/oder in Richtung der Lagerinnenteillängsachse zwischen den halbkugelförmigen Abschnitten angeordnet. Das Lagerinnenteil wird beispielsweise auch als Kugelstück bezeichnet. Der Lagerbereich und/oder das Lagerinnenteil ist bezüglich einer senkrecht zur Lagerinnenteillängsachse verlaufenden Symmetrieebene insbesondere spiegelsymmetrisch ausgebildet. Das Lagerinnenteil besteht bevorzugt aus Metall. Beispielsweise besteht das Lagerinnenteil aus einem Eisenwerkstoff, wie z.B. Stahl. Insbesondere besteht das Lagerinnenteil aus Vollmaterial.

Aufgrund der Elastomer-Halbschalen ist das Lagerinnenteil relativ zu der Außenhülse insbesondere begrenzt bewegbar und/oder auslenkbar. Somit kann die Lagerinnenteillängsachse gegenüber der Längsmittelachse geneigt sein. Insbesondere ist eine solche Neigung aber geringfügig, sodass die Lagerinnenteillängsachse auch im geneigten Zustand im Wesentlichen in axialer Richtung verläuft. Bevorzugt erstreckt sich das Lagerinnenteil in oder näherungsweise in axialer Richtung. In einem nicht ausgelenkten Zustand des Lagerinnenteils fällt die Lagerinnenteillängsachse bevorzugt mit der Längsmittelachse zusammen.

Bei den Erhebungen und/oder Vertiefungen des Lagerbereichs handelt es sich bevorzugt um radiale Erhebungen und/oder Vertiefungen. Unter dem Ausdruck "radial" und/oder "radiale Richtung" wird insbesondere eine oder jedwede Richtung verstanden, die quer und/oder senkrecht zur Längsmittelachse und/oder zur Lagerinnenteillängsachse verläuft.

Bevorzugt steht die Lageranordnung und/oder stehen die Elastomer-Halbschalen unter Vorspannung. Bei der Vorspannung handelt es sich vorzugsweise um eine Druckspannung, beispielsweise um eine axiale und/oder radiale Druckspannung.

Gemäß einer Weiterbildung ist jede Elastomer-Halbschale mit mehreren in axialer Richtung verlaufenden und rings ihres Innenumfangs im Abstand zueinander angeordneten Vertiefungen und/oder Erhebungen versehen. Insbesondere sind die Erhebungen des Lagerbereichs in die Vertiefungen der Elastomer-Halbschalen eingerückt und/oder die Erhebungen der Elastomer-Halbschalen sind insbesondere in die Vertiefungen des Lagerbereichs eingerückt. Bevorzugt bilden die Elastomer-Halbschalen mit ihren dem Lagerbereich zugewandten Seiten eine Negativform des Lagerbereichs.

Gemäß einer ersten Variante stehen die Elastomer-Halbschalen lediglich aufgrund ihrer Vorspannung mit den Erhebungen und/oder Vertiefungen des Lagerbereichs in Eingriff. In diesem Fall sind die Elastomer-Lagerschalen vor dem Zusammenbau des Elastomerlagers an ihrem Innenumfang bevorzugt frei von radialen Vertiefungen und/oder Erhebungen. Dies hat den Vorteil, dass insbesondere ein orientierter Einbau des Lagerinnenteils in die Lageranordnung und/oder in die Elastomer-Lagerschalen nicht erforderlich ist. Im bestimmungsgemäßen Einsatz des Elastomerlagers können hierbei allerdings verstärkt lokale Bewegungen der Elastomer-Lagerschalen relativ zu den Erhebungen und/oder Vertiefungen des Lagerbereichs auftreten, was zu einem vorzeitigen Abrieb und/oder Verschleiß der Elastomer-Lagerschalen führen kann.

Gemäß einer zweiten Variante sind die Elastomer-Halbschalen bereits vor dem Zusammenbau des Elastomerlagers an ihrem Innenumfang mit den Vertiefungen und/oder Erhebungen versehen. Insbesondere bilden die Elastomer-Halbschalen mit ihren dem Lagerbereich zugewandten Seiten bereits vor dem Zusammenbau des Elastomerlagers eine Negativform des Lagerbereichs. Hierdurch kann im bestimmungsgemäßen Einsatz des Elastomerlagers das Auftreten von lokalen Bewegungen der Elastomer-Lagerschalen relativ zu den Erhebungen und/oder Vertiefungen des Lagerbereichs reduziert werden, was auch zu einer Reduzierung des Abriebs und/oder Verschleißes der Elastomer-Lagerschalen führt.

Bevorzugt sind an den Erhebungen und/oder Vertiefungen des Lagerbereichs vorgesehene Kanten abgerundet. Bei diesen Kanten handelt es sich insbesondere um in axialer Richtung verlaufende Kanten. Durch das Abrunden der Kanten kann der Abrieb und/oder Verschleiß der Elastomer-Lagerschalen aufgrund von lokalen Bewegungen der Elastomer-Lagerschalen relativ zu den Erhebungen und/oder Vertiefungen des Lagerbereichs reduziert werden.

Gemäß einer Ausgestaltung sind die Erhebungen und/oder Vertiefungen des Lagerbereichs rings seines Außenumfangs gleichmäßig verteilt angeordnet. Bevorzugt ist der Lagerbereich mit vier Erhebungen und/oder Vertiefungen versehen. Insbesondere sind die Vertiefungen und/oder Erhebungen jeder Elastomer-Halbschale rings ihres Innenumfangs gleichmäßig verteilt angeordnet. Bevorzugt ist jede Elastomer-Halbschale mit vier Vertiefungen und/oder Erhebungen versehen.

Bevorzugt ist das Lagerinnenteil ein Schmiedeteil. Insbesondere ist das Lagerinnenteil durch Gesenkschmieden hergestellt. Vorzugsweise sind die Erhebungen und/oder Vertiefungen des Lagerbereichs in Entformungsrichtung, insbesondere des oder eines für das Schmieden genutzten Gesenks, hinterschnittfrei. Die Schmiederichtung ist insbesondere diejenige Richtung, in welcher zwei Gesenkteile, beispielsweise ein Obergesenk und ein Untergesenk, zum Schmieden und/oder Formen des Lagerinnenteils zusammen gefahren werden und/oder in welcher eines dieser Gesenkteile gegen ein anderes dieser Gesenkteile zum Schmieden und/oder Formen des Lagerinnenteils bewegt wird. Die Entformungsrichtung ist insbesondere diejenige Richtung, in welcher die Gesenkteile nach dem Schmieden und/oder Formen des Lagerinnenteils auseinander gefahren werden und/oder in welcher das eine Gesenkteil von dem anderen Gesenkteil nach dem Schmieden und/oder Formen des Lagerinnenteils weg bewegt wird. Die Schmiederichtung und die Entformungsrichtung sind insbesondere einander entgegengesetzt. Bevorzugt sind die Erhebungen des Lagerbereichs in oder parallel zur und/oder senkrecht zur Schmiederichtung und/oder Entformungsrichtung vorgesehen. Vorteilhaft sind die Vertiefungen des Lagerbereichs in oder parallel zur und/oder schräg zur Schmiederichtung und/oder Entformungsrichtung vorgesehen. Bevorzugt sind die Vertiefungen des Lagerbereichs nicht senkrecht zur Schmiederichtung und/oder Entformungsrichtung vorgesehen. Beispielsweise schließen die Vertiefungen des Lagerbereichs mit der Schmiederichtung und/oder Entformungsrichtung jeweils einen Winkel von 45° ein. Hierdurch kann insbesondere ein Entformen des Lagerinnenteils nach dem Schmieden sichergestellt werden. Alternativ kann das Lagerinnenteil aber auch durch ein Urformverfahren, wie z.B. durch Gießen, hergestellt sein. In diesem Fall ist das Lagerinnenteil beispielsweise ein Gussteil. Die Oberfläche des Lagerinnenteils und/oder des Lagerbereichs wird nach dem Schmieden oder Urformen vorzugsweise nicht nachbearbeitet. Hierdurch können Kosten gespart werden.

Die Elastomer-Halbschalen können in axialer Richtung einen Abstand zueinander aufweisen. Bevorzugt liegen die Elastomer-Halbschalen in axialer Richtung aber aneinander an. Vorzugsweise sind die Elastomer-Halbschalen als Gleichteile ausgebildet.

Die Elastomer-Halbschalen bestehen insbesondere aus einem Elastomer. Bevorzugt bestehen die Elastomer-Halbschalen aus Gummi und/oder aus einem vulkanisierten oder teilvulkanisierten Kautschuk. Bei dem Kautschuk handelt es sich z.B. um einen natürlichen oder um einen synthetischen Kautschuk.

Gemäß einer Weiterbildung ist jede Elastomer-Halbschale an ihrer dem Lagerbereich abgewandten Stirnseite mit einem das Lagerinnenteil umringenden Ring, insbesondere durch Vulkanisation und/oder Kleben, fest und/oder stoffschlüssig verbunden. Die Ringe ermöglichen eine gute axiale Abstützbarkeit der Elastomer-Halbschalen und somit der Lageranordnung. Die Ringe sind vorzugsweise als Gleichteile ausgebildet. Insbesondere sind die Ringe formstabil. Bevorzugt bestehen die Ringe aus Metall und werden vorzugsweise als Metallringe bezeichnet. Insbesondere bestehen die Ringe aus einem Eisenwerkstoff, wie z.B. Stahl.

Bevorzugt weist die Außenhülse ein erstes Sicherungselement auf, an welchem eine erste der Elastomer-Halbschalen, insbesondere mit ihrem Metallring, axial abgestützt ist und/oder anliegt. Vorteilhaft ist in der Außenhülse ein zweites Sicherungselement befestigt, an welchem eine zweite der Elastomer-Halbschalen, insbesondere mit ihrem Metallring, axial abgestützt ist und/oder anliegt. Bevorzugt umfasst die Außenhülse eine Innenschulter, die insbesondere das erste Sicherungselement ist oder bildet. Das erste Sicherungselement ist vorzugsweise einstückig und/oder materialhomogen mit der Außenhülse ausgebildet. Bevorzugt ist das erste Sicherungselement ringförmig ausgebildet. Das zweite Sicherungselement bildet vorteilhaft ein separates Bauteil. Insbesondere sitzt das zweite Sicherungselement in einer am Innenumfang der Außenhülse vorgesehenen Nut, die insbesondere als umlaufende Nut oder Ringnut ausgebildet ist. Bevorzugt ist das zweite Sicherungselement ringförmig ausgebildet. Vorteilhaft ist das zweite Sicherungselement durch einen Sicherungsring oder einen Lamellenring gebildet. Sicherungsringe und Lamellenringe sind Sicherungselemente zur axialen Lagesicherung, beispielsweise von Bolzen in Bohrungen. Sicherungsringe und Lamellenringe benötigen in der Bohrung eine umlaufende Nut zur Abstützung von Axialkräften. Vorzugsweise ist die Lageranordnung durch die beiden Sicherungselemente axial, insbesondere axial beidseitig, in der Außenhülse festgelegt. Die beiden Sicherungselemente weisen in axialer Richtung insbesondere einen Abstand zueinander auf. Durch das Ausbilden des zweiten Sicherungselements als Sicherungsring oder Lamellenring ist das Elastomerlager insbesondere demontierbar, sodass z.B. die Elastomer-Halbschalen nach Verschleiß ausgetauscht werden können.

Gemäß einer Ausgestaltung ist das erste Sicherungselement als separates Bauteil ausgebildet. Insbesondere sitzt das erste Sicherungselement in einer am Innenumfang der Außenhülse vorgesehenen Nut, die insbesondere als umlaufende Nut oder Ringnut ausgebildet ist. Vorteilhaft ist das erste Sicherungselement durch einen Sicherungsring oder einen Lamellenring gebildet. Die beiden Nuten weisen in axialer Richtung insbesondere einen Abstand zueinander auf.

Das Elastomerlager ist bevorzugt für ein Nutzfahrzeug vorgesehen. Insbesondere ist das Elastomerlager in ein Fahrzeug oder Nutzfahrzeug, beispielsweise in dessen Radaufhängung oder Achsaufhängung, eingebaut.

Die Erfindung wird nachfolgend anhand bevorzugter Ausführungsformen unter Bezugnahme auf die Zeichnung beschrieben. In der Zeichnung zeigen:
- Fig. 1: eine teilweise geschnittene Ansicht eines Elastomerlagers gemäß einer ersten Ausführungsform,
- Fig. 2: eine Schnittansicht von einer der aus Fig. 1 ersichtlichen Elastomer-Halbschalen,
- Fig. 3: eine Schnittansicht durch die Elastomer-Halbschale nach Fig. 2 entlang der aus Fig. 2 ersichtlichen Schnittlinie A-A,
- Fig. 4: eine perspektivische Ansicht des aus Fig. 1 ersichtlichen Lagerinnenteils,
- Fig. 5: eine Seitenansicht des aus Fig. 1 ersichtlichen Lagerinnenteils,
- Fig. 6: eine Draufsicht auf das aus Fig. 1 ersichtliche Lagerinnenteil,
- Fig. 7: eine Schnittansicht der aus Fig. 1 ersichtlichen Baugruppe aus Lagerinnenteil und Elastomer-Halbschalen,
- Fig. 8: eine perspektivische Ansicht eines Lagerinnenteils gemäß einer zweiten Ausführungsform,
- Fig. 9: eine Seitenansicht des Lagerinnenteils gemäß der zweiten Ausführungsform,
- Fig. 10: eine Draufsicht auf das Lagerinnenteil gemäß der zweiten Ausführungsform und
- Fig. 11: eine Schnittansicht durch eine Elastomer-Halbschale gemäß der zweiten Ausführungsform.

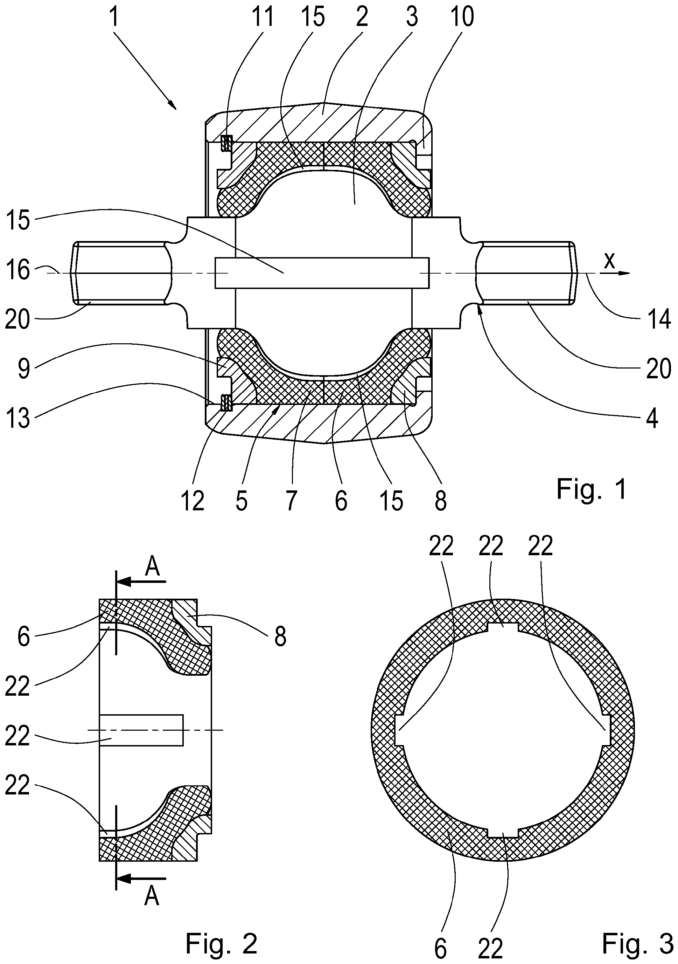

Aus Fig. 1 ist eine teilweise geschnittene Ansicht eines Elastomerlagers 1 gemäß einer ersten Ausführungsform ersichtlich, welches eine sich in einer axialen Richtung x erstreckende Außenhülse 2, ein einen erhabenen Lagerbereich 3 umfassendes Lagerinnenteil 4, welches mit seinem Lagerbereich 3 in der Außenhülse 2 angeordnet ist und sich in axialer Richtung x beidseitig aus der Außenhülse 2 heraus erstreckt, und eine den Lagerbereich 3 umringende und in axialer Richtung x beidseitig in der Außenhülse 2 festgelegte Lageranordnung 5 aufweist, die sich von dem Lagerinnenteil 4 bis zu der Außenhülse 2 erstreckt und zwei in axialer Richtung x nebeneinander angeordnete Elastomer-Halbschalen 6 und 7 umfasst, zwischen denen der Lagerbereich 3 in axialer Richtung x gesichert ist. Jede der Elastomer-Halbschalen 6 und 7 ist an ihrer dem Lagerbereich 3 abgewandten Stirnseite mit einem das Lagerinnenteil 4 umringenden Metallring 8 bzw. 9 durch Vulkanisation stoffschlüssig verbunden und mit diesem an einem Sicherungselement 10 bzw. 11 axial abgestützt. Das Sicherungselement 10 ist durch eine umlaufende Innenschulter der Außenhülse 2 gebildet, wohingegen das Sicherungselement 11 durch einen Lamellenring gebildet ist, der in einer umlaufenden Nut 12 sitzt, die in der Innenumfangsfläche 13 der Außenhülse 2 vorgesehen ist. Die Lageranordnung 5 ist somit durch die beiden Sicherungselemente 10 und 11 axial beidseitig in der Außenhülse 2 festgelegt.

Aus Fig. 1 ist ferner eine in axialer Richtung x verlaufende Längsmittelachse 14 des Elastomerlagers 1 ersichtlich. Bis auf das Lagerinnenteil 4 ist das Elastomerlager 1 in Fig. 1 entlang einer durch die Längsmittelachse 14 verlaufenden Schnittebene geschnitten dargestellt (Längsschnitt).

Fig. 2 zeigt einen Längsschnitt durch die Elastomer-Halbschale 6 mit Metallring 8, wobei Fig. 3 eine Schnittansicht oder einen Querschnitt der Elastomer-Halbschale 6 entlang der aus Fig. 2 ersichtlichen Schnittlinie A-A zeigt. Es ist zu erkennen, dass die Elastomer-Halbschale 6 rings ihres Innenumfangs mit vier Vertiefungen 22 versehen ist. Die Elastomer-Halbschale 7 ist entsprechend aufgebaut, da die Elastomer-Halbschalen 6 und 7 als Gleichteile ausgebildet sind. Ferner sind die Metallringe 8 und 9 als Gleichteile ausgebildet.

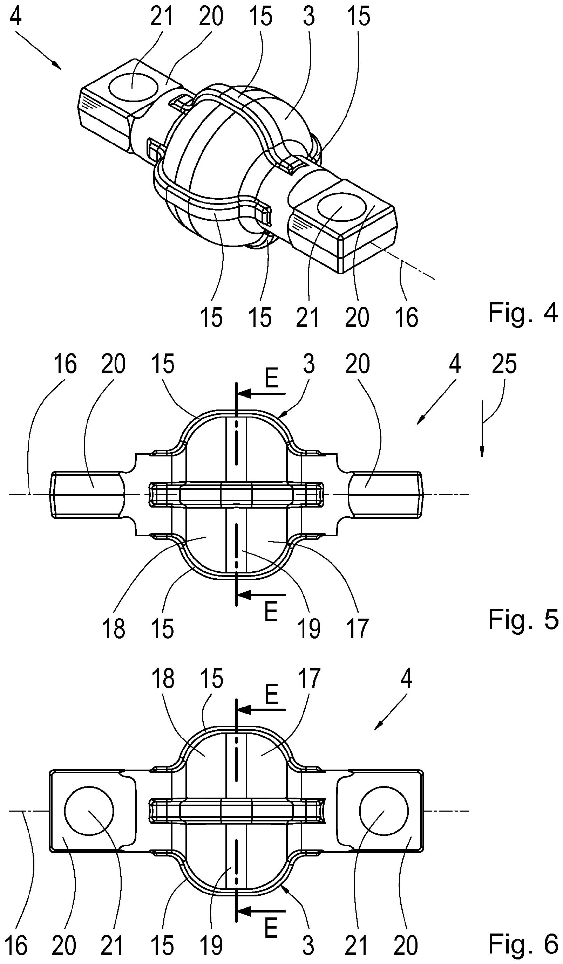

Aus den Fig. 4 bis 6 sind unterschiedliche Darstellungen des Lagerinnenteils 4 ersichtlich, wobei Fig. 4 eine perspektivische Ansicht, Fig. 5 eine Seitenansicht und Fig. 6 eine Draufsicht auf das Lagerinnenteil 4 zeigen, dessen Lagerbereich 3 mit vier in Richtung einer Lagerinnenteillängsachse 16 verlaufenden und rings seines Außenumfangs im Abstand zueinander angeordneten Erhebungen 15 versehen ist, die bezüglich der Lagerinnenteillängsachse 16 jeweils um 90° zueinander versetzt angeordnet sind. Der Lagerbereich 3 ist bezüglich einer senkrecht zur Lagerinnenteillängsachse 16 verlaufenden Symmetrieebene E spiegelsymmetrisch aufgebaut und weist zwei halbkugelförmige Abschnitte 17 und 18 sowie einen in Richtung der Lagerinnenteillängsachse 16 zwischen diesen angeordneten zylindrischen Abschnitt 19 auf. Ferner ist das Lagerinnenteil 4 an seinen axialen Enden mit abgeflachten Anschlussbereichen 20 versehen, durch welches sich jeweils ein Montageloch 21 hindurch erstreckt. Abgesehen von den Erhebungen 15 und den Anschlussbereichen 20 ist das Lagerinnenteil 4 bezüglich der Lagerinnenteillängsachse 16 rotationssymmetrisch ausgebildet.

Das Lagerinnenteil 4 ist als Schmiedeteil ausgebildet und durch Gesenkschmieden hergestellt, wobei die Schmiederichtung 25, in welcher ein Obergesenk gegen ein Untergesenk zum Formen des Lagerinnenteils 4 bewegt wird, in Fig. 5 dargestellt ist. Zwei einander gegenüberliegende der Erhebungen 15 sind dabei in Schmiederichtung 25 vorgesehen, und zwei andere einander gegenüberliegende der Erhebungen 15 sind senkrecht zur Schmiederichtung 25 vorgesehen.

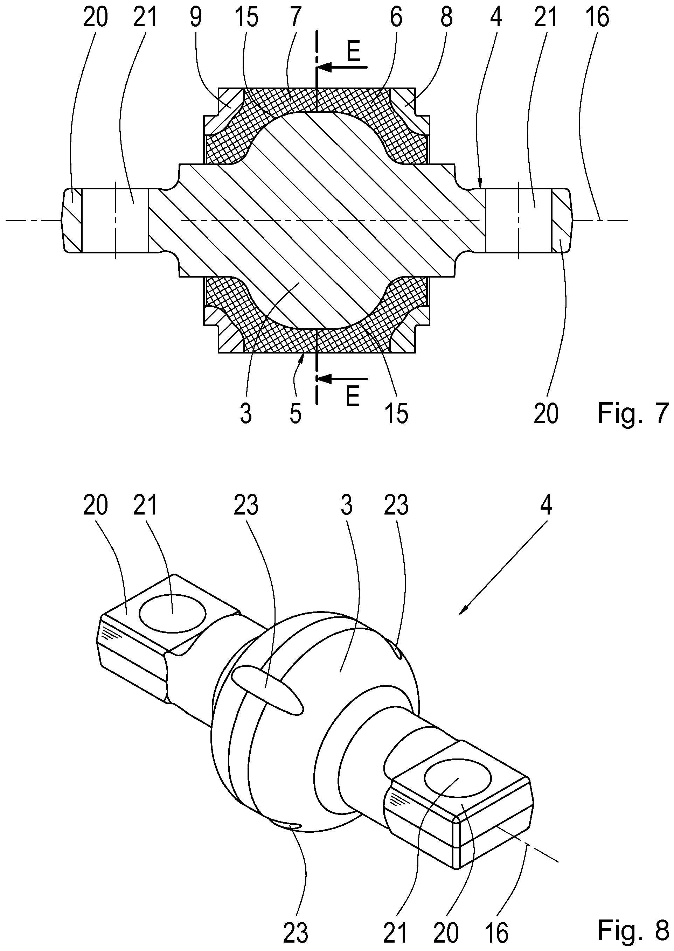

Zur Montage des Elastomerlagers 1 werden die Elastomer-Halbschalen 6 und 7 von unterschiedlichen Seiten auf das Lagerinnenteil 4 aufgeschoben, sodass die beiden Elastomer-Halbschalen 6 und 7 im Bereich der Symmetrieebene E aneinander anliegen und zusammen die Lageranordnung 5 bilden. Dabei greifen die Erhebungen 15 in die Vertiefungen 22 ein. Die dadurch hergestellte und im Längsschnitt aus Fig. 7 ersichtliche Baugruppe wird anschließend in axialer Richtung x in die Außenhülse 2 eingesetzt, bis der Metallring 8 an der Innenschulter 10 anliegt. Anschließend wird die Lageranordnung 5 in axialer Richtung x komprimiert und durch Einsetzen des Lamellenrings 11 in die Nut 12 in der Außenhülse 2 gesichert.

Aufgrund der Elastomer-Halbschalen 6 und 7 ist das Lagerinnenteil 4 relativ zu der Außenhülse 2 begrenzt bewegbar und/oder auslenkbar, sodass die Lagerinnenteillängsachse 16 gegenüber der Längsmittelachse 14 geneigt sein kann. Diese Neigung ist aber geringfügig, sodass die Lagerinnenteillängsachse 16 auch im geneigten Zustand im Wesentlichen in axialer Richtung x verläuft. In Fig. 1 ist das Lagerinnenteil 4 im nicht ausgelenkten Zustand dargestellt, sodass die Lagerinnenteillängsachse 16 mit der Längsmittelachse 14 zusammenfällt.

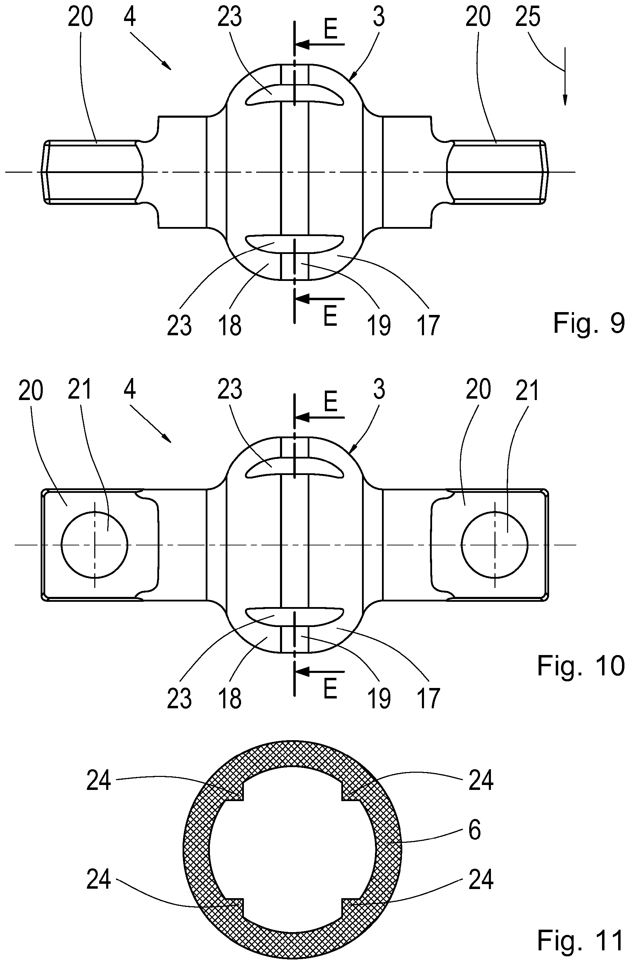

Aus den Fig. 8 bis 10 sind unterschiedliche Darstellungen eines Lagerinnenteils 4 gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind. Fig. 8 zeigt eine perspektivische Ansicht, Fig. 9 zeigt eine Seitenansicht und Fig. 10 zeigt eine Draufsicht auf das Lagerinnenteil 4 gemäß der zweiten Ausführungsform. Im Unterschied zur ersten Ausführungsform ist der Lagerbereich 3 mit vier in Richtung der Lagerinnenteillängsachse 16 verlaufenden und rings seines Außenumfangs im Abstand zueinander angeordneten Vertiefungen 23 versehen, die bezüglich der Lagerinnenteillängsachse 16 jeweils um 90° zueinander versetzt angeordnet sind. Die Vertiefungen 23 sind schräg, insbesondere in einem Winkel von jeweils 45°, zur Schmiederichtung 25 (siehe Fig. 9) des durch Gesenkschmieden hergestellten Lagerinnenteils 4 vorgesehen.

Fig. 11 zeigt eine Schnittansicht oder einen Querschnitt einer Elastomer-Halbschale 6 gemäß der zweiten Ausführungsform, wobei die in Fig. 11 gezeigte Ansicht bei der ersten Ausführungsform der in Fig. 3 gezeigten Ansicht entspricht. Im Unterschied zur ersten Ausführungsform ist die Elastomer-Halbschale 6 rings ihres Innenumfangs mit vier Erhebungen 24 versehen. Die andere Elastomer-Halbschale ist entsprechend aufgebaut, da auch gemäß der zweiten Ausführungsform die Elastomer-Halbschalen als Gleichteile ausgebildet sind.

Zur Montage des Elastomerlagers 1 werden die Elastomer-Halbschalen 6 und 7 von unterschiedlichen Seiten auf das Lagerinnenteil 4 aufgeschoben, sodass sie im Bereich der Symmetrieebene E aneinander anliegen und zusammen die Lageranordnung 5 bilden. Dabei greifen die Erhebungen 24 in die Vertiefungen 23 ein. Abgesehen von diesen Unterschieden stimmt die zweite Ausführungsform mit der ersten Ausführungsform überein, sodass zur weiteren Beschreibung der zweiten Ausführungsform auf die Beschreibung der ersten Ausführungsform verwiesen wird.

### Bezugszeichen

- 1: Elastomerlager
- 2: Außenhülse
- 3: Lagerbereich des Lagerinnenteils
- 4: Lagerinnenteil
- 5: Lageranordnung
- 6: Elastomer-Halbschale der Lageranordnung
- 7: Elastomer-Halbschale der Lageranordnung
- 8: Metallring
- 9: Metallring
- 10: Sicherungselement / Innenschulter
- 11: Sicherungselement / Lamellenring
- 12: Nut in Innenumfangsfläche der Außenhülse
- 13: Innenumfangsfläche der Außenhülse
- 14: Längsmittelachse
- 15: Erhebung des Lagerbereichs
- 16: Lagerinnenteillängsachse
- 17: halbkugelförmiger Abschnitt des Lagerbereichs
- 18: halbkugelförmiger Abschnitt des Lagerbereichs
- 19: zylindrischer Abschnitt des Lagerbereichs
- 20: Anschlussbereich des Lagerinnenteils
- 21: Montageloch im Anschlussbereich
- 22: Vertiefung in Elastomer-Halbschale
- 23: Vertiefung in Lagerbereich
- 24: Erhebung an Elastomer-Halbschale
- 25: Schmiederichtung
- x: axiale Richtung

## Patentansprüche

1. Elastomerlager für ein Fahrzeug, mit einer sich in einer axialen Richtung (x) erstreckenden Außenhülse (2), einem einen erhabenen Lagerbereich (3) umfassenden Lagerinnenteil (4), welches mit seinem Lagerbereich (3) in der Außenhülse (2) angeordnet ist und sich in axialer Richtung (x) beidseitig aus der Außenhülse (2) heraus erstreckt, und einer den Lagerbereich (3) umringenden und in axialer Richtung (x) beidseitig in der Außenhülse (2) festgelegten Lageranordnung (5), die sich von dem Lagerinnenteil (4) bis zu der Außenhülse (2) erstreckt und zwei in axialer Richtung (x) nebeneinander angeordnete Elastomer-Halbschalen (6, 7) umfasst, zwischen denen der Lagerbereich (3) in axialer Richtung (x) gesichert ist, wobei das Lagerinnenteil (4) mit den Elastomer-Halbschalen (6, 7) nicht stoffschlüssig verbunden ist, **dadurch gekennzeichnet, dass** der Lagerbereich (3) mit mehreren in axialer Richtung (x) verlaufenden und rings seines Außenumfangs im Abstand zueinander angeordneten Erhebungen (15) und/oder Vertiefungen (23) versehen ist, die formschlüssig mit den Elastomer-Halbschalen (6, 7) in Eingriff stehen, wobei der Lagerbereich (3), abgesehen von den Erhebungen (15) und/oder Vertiefungen (23), kugelförmig oder näherungsweise kugelförmig ausgebildet ist.

2. Elastomerlager nach Anspruch 1, **dadurch gekennzeichnet, dass** jede Elastomer-Halbschale (6, 7) mit mehreren in axialer Richtung (x) verlaufenden und rings ihres Innenumfangs im Abstand zueinander angeordneten Vertiefungen (22) und/oder Erhebungen (24) versehen ist, wobei die Erhebungen (15) des Lagerbereichs (3) in die Vertiefungen (22) der Elastomer-Halbschalen (6, 7) eingerückt sind und/oder die Erhebungen (24) der Elastomer-Halbschalen (6, 7) in die Vertiefungen (23) des Lagerbereichs (3) eingerückt sind.

3. Elastomerlager nach Anspruch 1 oder 2, **dadurch gekennzeichnet, dass** die Elastomer-Halbschalen (6, 7) mit ihren dem Lagerbereich (3) zugewandten Seiten eine Negativform des Lagerbereichs (3) bilden.

4. Elastomerlager nach einem der vorangehenden Ansprüche, **dadurch gekennzeichnet, dass** die Erhebungen (15) und/oder Vertiefungen (23) des Lagerbereichs (3) rings seines Außenumfangs gleichmäßig verteilt angeordnet sind.

5. Elastomerlager nach einem der vorangehenden Ansprüche, **dadurch gekennzeichnet, dass** das Lagerinnenteil (4) ein durch Gesenkschmieden hergestelltes Schmiedeteil ist.

6. Elastomerlager nach Anspruch 5, **dadurch gekennzeichnet, dass** die Erhebungen (15) des Lagerbereichs (3) in Schmiederichtung (25) und/oder senkrecht zur Schmiederichtung (25) vorgesehen sind.

7. Elastomerlager nach Anspruch 5 oder 6, **dadurch gekennzeichnet, dass** die Vertiefungen (23) des Lagerbereichs (3) schräg zur Schmiederichtung (25) vorgesehen sind.

8. Elastomerlager nach einem der vorangehenden Ansprüche, **dadurch gekennzeichnet, dass** die Elastomer-Halbschalen (6, 7) in axialer Richtung (x) aneinander anliegen.

9. Elastomerlager nach einem der vorangehenden Ansprüche, **dadurch gekennzeichnet, dass** jede Elastomer-Halbschale (6, 7) an ihrer dem Lagerbereich (3) abgewandten Stirnseite mit einem das Lagerinnenteil (4) umringenden Metallring (8, 9) stoffschlüssig verbunden ist.

10. Elastomerlager nach Anspruch 9, **dadurch gekennzeichnet, dass** die Außenhülse (2) eine Innenschulter (10) aufweist, an welcher eine erste der Elastomer-Halbschalen (6) mit ihrem Metallring (8) axial abgestützt ist.

11. Elastomerlager nach Anspruch 10, **dadurch gekennzeichnet, dass** in der Außenhülse (2) ein Sicherungselement (11) befestigt ist, an welchem eine zweite der Elastomer-Halbschalen (7) mit ihrem Metallring (9) axial abgestützt ist, sodass die Lageranordnung (5) durch die Innenschulter (10) und das Sicherungselement (11) axial beidseitig in der Außenhülse (2) festgelegt ist.

## Claims

1. Elastomeric bearing for a vehicle, having an outer sleeve (2) which extends in an axial direction (x), a bearing inner part (4) which comprises an elevated bearing region (3), is arranged with its bearing region (3) in the outer sleeve (2), and extends out of the outer sleeve (2) in the axial direction (x) on both sides, and a bearing arrangement (5) which surrounds the bearing region (3), is fixed in the outer sleeve (2) on both sides in the axial direction (x), extends from the bearing inner part (4) as far as the outer sleeve (2), and comprises two elastomeric half shells (6, 7) which are arranged next to one another in the axial direction (x) and between which the bearing region (3) is secured in the axial direction (x), the bearing inner part (4) not being connected to the elastomeric half shells (6, 7) in an integrally joined manner, **characterized in that** the bearing region (3) is provided with a plurality of elevations (15) and/or depressions (23) which run in the axial direction (x), are arranged at a spacing from one another around the outer circumference of the said bearing region (3), and are in positively locking engagement with the elastomeric half shells (6, 7), the bearing region (3) being of spherical or approximately spherical configuration, apart from the elevations (15) and/or depressions (23).

2. Elastomeric bearing according to Claim 1, **characterized in that** each elastomeric half shell (6, 7) is provided with a plurality of depressions (22) and/or elevations (24) which run in the axial direction (x) and are arranged at a spacing from one another around the inner circumference of the said elastomeric half shell (6, 7), the elevations (15) of the bearing region (3) being inserted into the depressions (22) of the elastomeric half shells (6, 7), and/or the elevations (24) of the elastomeric half shells (6, 7) being inserted into the depressions (23) of the bearing region (3).

3. Elastomeric bearing according to Claim 1 or 2, **characterized in that**, by way of their sides which face the bearing region (3), the elastomeric half shells (6, 7) form a negative shape of the bearing region (3).

4. Elastomeric bearing according to one of the preceding claims, **characterized in that** the elevations (15) and/or depressions (23) of the bearing region (3) are arranged distributed uniformly around the outer circumference of the said bearing region (3).

5. Elastomeric bearing according to one of the preceding claims, **characterized in that** the bearing inner part (4) is a forged part which is manufactured by way of drop forging.

6. Elastomeric bearing according to Claim 5, **characterized in that** the elevations (15) of the bearing region (3) are provided in the forging direction (25) and/or perpendicularly with respect to the forging direction (25).

7. Elastomeric bearing according to Claim 5 or 6, **characterized in that** the depressions (23) of the bearing region (3) are provided obliquely with respect to the forging direction (25).

8. Elastomeric bearing according to one of the preceding claims, **characterized in that** the elastomeric half shells (6, 7) bear against one another in the axial direction (x).

9. Elastomeric bearing according to one of the preceding claims, **characterized in that**, on its end side which faces away from the bearing region (3), each elastomeric half shell (6, 7) is connected in an integrally joined manner to a metal ring (8, 9) which surrounds the bearing inner part (4).

10. Elastomeric bearing according to Claim 9, **characterized in that** the outer sleeve (2) has an inner shoulder (10), on which a first one of the elastomeric half shells (6) is supported axially by way of its metal ring (8).

11. Elastomeric bearing according to Claim 10, **characterized in that** a securing element (11) is fastened in the outer sleeve (2), on which securing element (11) a second one of the elastomeric half shells (7) is supported axially by way of its metal ring (9), with the result that the bearing arrangement (5) is fixed in the outer sleeve (2) axially on both sides by way of the inner shoulder (10) and the securing element (11).

## Revendications

1. Palier élastomère pour un véhicule, comprenant une douille extérieure (2) s'étendant dans une direction axiale (x), une partie intérieure de palier (4) comprenant une région de palier rehaussée (3), qui est disposée avec sa région de palier (3) dans la douille extérieure (2) et qui s'étend dans la direction axiale (x) des deux côtés hors de la douille extérieure (2) et un agencement de palier (5) entourant la région de palier (3) et fixé dans la direction axiale (x) des deux côtés dans la douille extérieure (2), qui s'étend depuis la partie intérieure de palier (4) jusqu'à la douille extérieure (2) et qui comprend deux demi-coques en élastomère (6, 7) disposées l'une à côté de l'autre dans la direction axiale (x), entre lesquelles la région de palier (3) est fixée dans la direction axiale (x), la partie intérieure de palier (4) n'étant pas reliée par engagement par liaison de matière avec les demi-coques en élastomère (6, 7), **caractérisé en ce que** la région de palier (3) est pourvue de plusieurs rehaussements (15) et/ou renfoncements (23) s'étendant dans la direction axiale (x) et disposés tout autour de sa périphérie extérieure à distance les uns des autres, lesquels sont en prise par engagement par correspondance de forme avec les demi-coques en élastomère (6, 7), la région de palier (3), à l'exception des rehaussements (15) et/ou des renfoncements (23), étant réalisée sous forme sphérique ou approximativement sphérique.

2. Palier élastomère selon la revendication 1, **caractérisé en ce que** chaque demi-coque en élastomère (6, 7) est pourvue de plusieurs renfoncements (22) et/ou rehaussements (24) s'étendant dans la direction axiale (x) et disposés tout autour de sa périphérie intérieure à distance les uns des autres, les rehaussements (15) de la région de palier (3) étant enfoncés dans les renfoncements (22) des demi-coques en élastomère (6, 7) et/ou les rehaussements (24) des demi-coques en élastomère (6, 7) étant enfoncés dans les renfoncements (23) de la région de palier (3) .

3. Palier élastomère selon la revendication 1 ou 2, **caractérisé en ce que** les demi-coques en élastomère (6, 7) forment, avec leur côté tourné vers la région de palier (3), une forme négative de la région de palier (3).

4. Palier élastomère selon l'une quelconque des revendications précédentes, **caractérisé en ce que** les rehaussements (15) et/ou les renfoncements (23) de la région de palier (3) sont disposés de manière répartie uniformément tout autour de sa périphérie extérieure.

5. Palier élastomère selon l'une quelconque des revendications précédentes, **caractérisé en ce que** la partie intérieure de palier (4) est une partie forgée fabriquée par emboutissage.

6. Palier élastomère selon la revendication 5, **caractérisé en ce que** les rehaussements (15) de la région de palier (3) sont prévus dans la direction de forgeage (25) et/ou perpendiculairement à la direction de forgeage (25).

7. Palier élastomère selon la revendication 5 ou 6, **caractérisé en ce que** les renfoncements (23) de la région de palier (3) sont prévus obliquement par rapport à la direction de forgeage (25).

8. Palier élastomère selon l'une quelconque des revendications précédentes, **caractérisé en ce que** les demi-coques en élastomère (6, 7) s'appliquent les unes contre les zones dans la direction axiale (x) .

9. Palier élastomère selon l'une quelconque des revendications précédentes, **caractérisé en ce que** chaque demi-coque en élastomère (6, 7) est reliée par liaison de matière au niveau de son côté frontal opposé à la région de palier (3) à une bague métallique (8, 9) entourant la partie intérieure de palier (4).

10. Palier élastomère selon la revendication 9, **caractérisé en ce que** la douille extérieure (2) présente un épaulement intérieur (10) au niveau duquel une première demi-coque en élastomère parmi les demi-coques en élastomère (6) est supportée axialement avec sa bague métallique (8).

11. Palier élastomère selon la revendication 10, **caractérisé en ce que** dans la douille extérieure (2) est fixé un élément de fixation (11) au niveau duquel une deuxième demi-coque en élastomère parmi les demi-coques en élastomère (7) est supportée axialement avec sa bague métallique (9) de telle sorte que l'agencement de palier (5) soit fixé axialement des deux côtés dans la douille extérieure (2) par l'épaulement intérieur (10) et l'élément de fixation (11).
